# EUROPÄISCHE PATENTSCHRIFT

(11) **EP 3 757 303 B1**
(45) Veröffentlichungstag und Bekanntmachung des Hinweises auf die Patenterteilung: **22.03.2023**
(21) Anmeldenummer: 19182572.8
(22) Anmeldetag: 26.06.2019
(51) Int. Cl.: E03C 1/32, E03C 1/322, E03D 11/14, E04B 1/82, E04B 1/84, F16L 55/035, F16B 7/22, E03C 1/02, F16B 45/00

(54) **SANITÄRINSTALLATIONSSYSTEM**
SANITARY INSTALLATION SYSTEM
SYSTÈME D'INSTALLATION SANITAIRE

(43) Veröffentlichungstag der Anmeldung: 30.12.2020
(73) Patentinhaber: Geberit International AG, 8645 Jona (CH)
(72) Erfinder: BAGGENSTOS, Roger, 8716 Schmerikon (CH)
(74) Vertreter: Frischknecht, Harry Ralph

(56) Entgegenhaltungen:
- EP-A1- 1 921 216
- EP-A1- 3 339 712
- DE-A1-102012 110 779
- DE-U1- 8 806 058

## Beschreibung

### TECHNISCHES GEBIET

Die vorliegende Erfindung betrifft ein Sanitärinstallationssystem mit einem Schallabsorptionselement nach dem Oberbegriff von Anspruch 1.

### STAND DER TECHNIK

Aus dem Stand der Technik sind Sanitärinstallationssysteme bekannt geworden. Solche Sanitärinstallationssysteme umfassen typischerweise eine Montagestruktur, welche fest mit dem Gebäude verbunden wird. An der Montagestruktur werden dann die Sanitärartikel, wie eine Toilettenschüssel, ein Waschtisch, etc., befestigt oder angelegt und es werden zudem die Frischwasserleitungen und die Abwasserleitungen durch die Montagestruktur geführt. Die Montagestruktur wird durch eine Vorwandung verkleidet, wodurch ein Hohlraum bereitgestellt wird.

In der Praxis ist man aus Gründen des Schallschutzes dazu übergegangen, diesen Hohlraum mit Mineralwolle oder Flockenmaterial auszufüllen. Das Ausfüllen des Hohlraums verringert den Wiederhall von Geräuschen durch die Wasserzufuhr bzw. Wasserabfuhr zu den Sanitärartikeln oder von Geräuschen durch fallende WC-Deckel, erhöht aber die Montagezeit deutlich. Darüber hinaus ergehen technische Nachteile, beispielsweise, wenn zuviel Mineralwolle oder Flockenmaterial in den Hohlraum gepresst wird.

### DARSTELLUNG DER ERFINDUNG

Ausgehend von diesem Stand der Technik liegt der Erfindung eine Aufgabe zugrunde, ein Sanitärinstallationssystem anzugeben, welches die Nachteile des Standes der Technik überwindet. Insbesondere soll das Sanitärinstallationssystem einfach und reproduzierbar montierbar sein.

Diese Aufgabe löst der Gegenstand von Anspruch 1. Demgemäss umfasst ein Sanitärinstallationssystem eine fest mit einem Gebäude verbindbare Montagestruktur, mindestens ein die Montagestruktur verdeckendes Verkleidungselement, und mindestens ein wasserführendes Sanitärelement. Die Montagestruktur und das mindestens eine Verkleidungselement definieren einen Hohlraum. Mindestens eines der wasserführenden Sanitärelemente ist im Hohlraum angeordnet. Weiter ist im Hohlraum mindestens ein Schallabsorptionselement angeordnet. Das mindestens eine Schallabsorptionselement ist mit mindestens einem Befestigungselement an der Montagestruktur befestigt.

Durch die Befestigung des Schallabsorptionselementes mit dem mindestens einen Befestigungselement an der Montagestruktur kann eine determinierte Befestigung geschaffen werden. Dem Installateur wird demnach eine Montagehilfe an die Hand gegeben, was den Vorteil einer einfachen Montage ergibt. Darüber hinaus lassen sich die Schallabsorptionselemente bei grösseren Anlagen reproduzierbar montieren, was den Vorteil einer bestimmbaren Schalldämmung hat.

Unter der Ausdrucksweise "Anschlusselemente" werden Elemente verstanden, welche typischerweise in derartigen Strukturen eingesetzt werden. Beispielhaft werden Spülkasten, Wasserleitungen, Abwasserleitungen etc. genannt.

Neben dem im Hohlraum liegenden wasserführenden Sanitärelement können weitere ausserhalb des Hohlraums liegende wasserführende Sanitärelemente angeordnet sein. Ein Beispiel für ein im Hohlraum liegendes wasserführendes Sanitärelement ist eine Fallleitung. Wasserführende Sanitärelemente, welche ausserhalb des Hohlraums vor dem Verkleidungselement liegen sind beispielsweise Toilettenschüsseln, Urinale, Bidet, Waschtische, Duschen, etc. mit zugehörigen wiederum im Hohlraum liegenden Sanitärelementen, wie Spülkästen, Wasserleitungen, Abwasserleitungen, etc.. Erfindungsgemäss ist das Schallabsorptionselement mit dem mindestens einen Befestigungselement an einem oberen Ende des Schallabsorptionselements freihängend und insbesondere frei schwingend an der Montagestruktur im Hohlraum aufgehängt.

Unter der Ausdrucksweise "freihänged" wird verstanden, dass das Schallabsorptionselement an mindestens einer Stelle aufgehängt ist und keinen weiteren Kontakt mit der Montagestruktur aufweist. Durch die freihängende Aufhängung ergeht eine einfache Montage sowie eine verbesserte Schalldämmung.

Vorzugsweise ist das Schallabsorptionselement an mindestens einer Stelle oder ausschliesslich genau einer Stelle aufgehängt bzw. befestigt. Vorzugsweise ist die Befestigungsstelle in Einbaulage am oberen Ende des Schallabsorptionselements angeordnet. In einer anderen Variante könnte das Schallabsorptionselement in Einbaulage gesehen nicht nur oben, sondern auch unten mit der Montagestruktur verbunden werden.

Vorzugsweise ist das Schallabsorptionselement an einer in der Horizontalen verlaufenden Strebe der Montagestruktur befestigt ist und hängt in vertikaler Richtung nach unten. Die Strebe kann verschiedenartig ausgebildet sein. In einer ersten Variante ist die Strebe eine lasttragende Traverse der Montagestruktur. Unter einer lasttragenden Traverse wird ein Profilstab verstanden, an welcher ein Sanitärelement befestigt werden kann. In einer zweiten Variante ist die Strebe Teil eines Lagerelements, welches in eine Profilnut einer Traverse der Montagestruktur einrastbar ist.

Vorzugsweise ist das Schallabsorptionselement als determinierter bzw. fester bzw. formstabiler Körper ausgebildet ist. Eine derartige Ausbildung hat den Vorteil, dass dem Installateur ein Schallabsorptionselement mit definierter Ausbildung bereitgestellt wird, wodurch die Handhabung des Schallabsorptionselements einfacher wird.

Besonders bevorzugt weist das Schallabsorptionselement eine Frontfläche, eine Rückfläche und mindestens eine Seitenfläche auf, wobei die Rückfläche parallel und beabstandet zur Frontfläche verläuft, und wobei die Rückfläche und die Frontfläche über die Seitenfläche miteinander verbunden sind.

Besonders bevorzugt ist das Schallabsorptionselement als Quader ausgebildet ist. Das Schallabsorptionselement kann aber auch als Zylinder ausgebildet sein.

Vorzugsweise weist das Schallabsorptionselement in Einbaulage in vertikaler Richtung eine wesentlich grössere Ausdehnung auf als in horizontaler Richtung. Hierdurch ergeht der Vorteil, dass die üblicherweise zur Verfügung stehenden Platzverhältnisse gut ausgenützt werden können.

Besonders bevorzugt ist die Ausdehnung in vertikaler Richtung um einen Faktor 5 bis 20 grösser ist als die Ausdehnung in horizontaler Richtung.

Vorzugsweise weist das Schallabsorptionselement eine Länge von 80 bis 120 Zentimeter, eine Breite von 10 bis 20 Zentimetern und eine Dicke von 2 bis 10 Zentimetern, insbesondere von 3 bis 8 Zentimetern, auf.

Vorzugsweise liegt das Schallabsorptionselement derart im Hohlraum, dass sich dieses nur über einen Teilbereich der Höhe erstreckt und dass dieses beabstandet zum Boden des Gebäudes liegt.

Vorzugsweise sind bei mehreren Schallabsorptionselementen die Schallabsorptionselemente im Wesentlichen gleichmässig im Hohlraum verteilt. Hierdurch kann eine gute Schaldämmung erreicht werden.

Vorzugsweise nimmt die Projektion des Schallabsorptionselements in einer Projektionsebene der Frontseite der Montagestruktur zwischen 15% und 45% der gesamten Projektionsfläche der Frontseite ein. Die Projektionsebene ist eine Ebene die rechtwinklig zur Flächennormalen auf die Frontseite des Verkleidungselementes gesehen.

Vorzugsweise füllt das Schallabsorptionselement den Hohlraum nur teilweise bzw. nicht vollständig aus. Besonders bevorzugt füllt das Schallabsorptionselement den Hohlraum bis maximal 50 Volumenprozente aus.

Vorzugsweise weist das Schallabsorptionselement einen längenbezogenen Strömungswiderstand von grösser als 5 kPa^{∗}s /m2 auf. Unter kPa^{∗}s/m2 wird die Masseinheit Kilo-Pascal (Druck) mal Sekunde (Zeit) geteilt durch Quadratmeter (Fläche) verstanden.

Vorzugsweise ist das Schallabsorptionselement aus Polyethylenterephthalat, insbesondere aus rezykliertiem Polyethylenterephthalat, hergestellt. Vorzugsweise sind es Schallabsorptionselemente, welche aus Fasern bestehen und mehrlagig übereinandergeschichtet aufgebaut sind. Es können Chemiefasern aus synthetischen Polymeren (beispielsweise Polyestervliesstoff), pflanzliche Fasern (beispielsweise Baumwollvliesstoff), chemisch anorganische Fasern (beispielsweise Glasfaservliesstoffe), tierische Fasern (beispielsweise Wollfaservliesstoff), Chemiefasern aus natürlichen Polymeren pflanzlichen beziehungsweise cellulosischen Ursprungs (beispielsweise Viskosefaservliesstoff) oder ferner aus Chemiefasern aus Nichtpolymeren (beispielsweise Edelstahlfaservliesstoff). Alternativ wären auch geschäumte Werkstoffe (beispielsweise Polyurethan oder Polystyrol) oder Kombinationen aus geschäumten Werkstoffen und Faserwerkstoffen möglich.

Vorzugsweise ist das Schallabsorptionselement aus einem feuerfesten Material.

Besonders bevorzugt weist das Schallabsorptionselement, insbesondere, wenn es aus den oben genannten Fasern ist, eine Schichtstruktur auf, wobei die Schichten alle in die gleiche Richtung orientiert sind und miteinander verbunden sind. Das Schallabsorptionselement kann auch als Akustikvlies bezeichnet werden.

Vorzugsweise ist das Befestigungselement ein oberes Befestigungselement, mit welchem das Schallabsorptionselement an der Montagestruktur aufgehängt bzw. befestigt werden kann.

Vorzugsweise weist das Schallabsorptionselement weiter ein unteres Befestigungselement auf, das derart angeordnet ist, dass am unteren Befestigungselement ein weiteres Schallabsorptionselement aufgehängt bzw. befestigt werden kann.

Vorzugsweise umfassen das obere Befestigungselement und/oder das untere Befestigungselement einen Halteabschnitt, mit welchem das Befestigungselement in das Schallabsorptionselement einragt, wobei der Halteabschnitt vorzugsweise Widerhaken aufweist, welche derart angeordnet sind, dass die Widerhaken einen Widerstand bei einer Auszugskraft auf das Befestigungselement bereitstellen.

Die Widerhaken können direkt am Befestigungselement angeformt sein. Die Widerhaken können aber auch Teil eines Dübelelementes sein, mit welchem das Befestigungselement verbunden werden kann.

Besonders bevorzugt weist das Befestigungselement einen Hakenabschnitt mit einem Haken auf, an welchem das Befestigungselement mit der Montagestruktur verbunden werden kann. Mit dem Haken kann das Befestigungselement sehr einfach mit der Montagestruktur über eine Einhängbewegung eingehängt werden.

Ein Verfahren zur Montage eines Sanitärinstallationssystem nach obiger Beschreibung ist dadurch charakterisiert, dass in einem ersten Schritt die Montagestruktur angeordnet wird, dass in einem weiteren Schritt die Anschlusselemente montiert werden, dass in einem weiteren Schritt das mindestens eine Schallabsorptionselement montiert wird, und dass in einem weiteren Schritt das mindestens eine Verkleidungselement montiert wird, wobei zwischen oder nach den genannten Schritten, das mindestens eine wasserführende Sanitärelement montiert wird.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Frontansicht eines Sanitärinstallationssystem nach einer Ausführungsform der vorliegenden Erfindung;
- Fig. 2: eine perspektivische Ansicht eines Schallabsorptionselements, das im Sanitärinstallationssystem nach der Figur 1 eingesetzt ist;
- Fig. 3: eine Detailansicht der Figur 2; und
- Fig. 4: eine Schnittdarstellung im Bereich der Aufhängung des Schallabsorptionselements nach der Figur 1.

### BESCHREIBUNG BEVORZUGTER AUSFÜHRUNGSFORMEN

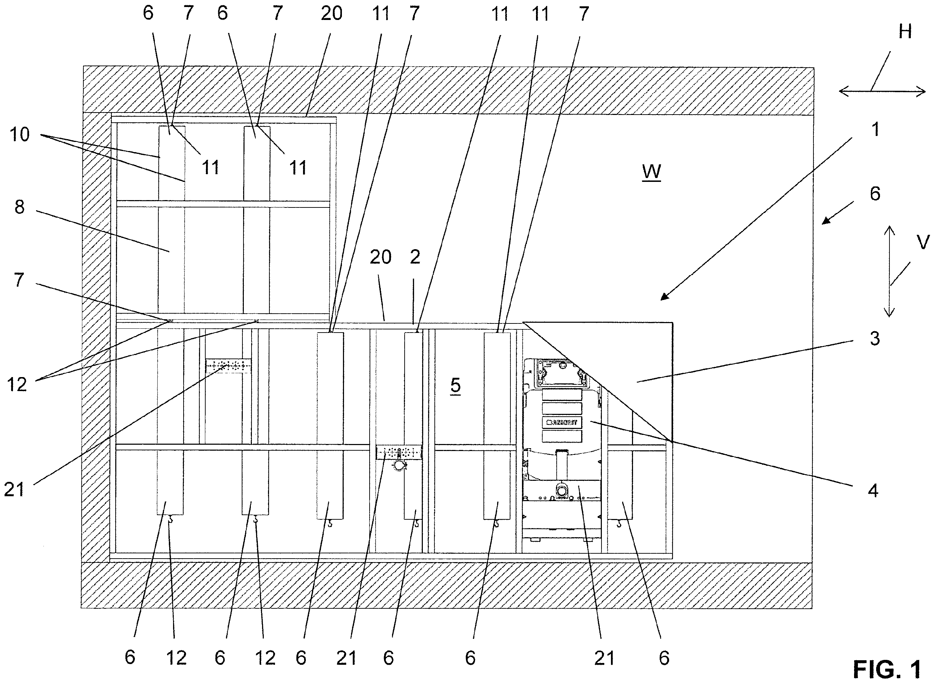

In der Figur 1 wird eine Frontansicht eines Sanitärinstallationssystems 1 gezeigt. Das Sanitärinstallationssystems 1 ist in einem Gebäude G angeordnet und wird mit dem Gebäude G fest verbunden.

Das Sanitärinstallationssystem 1 umfasst eine Montagestruktur 2, mindestens ein die Montagestruktur 2 verdeckendes Verkleidungselement 3 und mindestens ein wasserführendes Sanitärelement 4. Das wasserführende Sanitärelement 4 wird hier in der Form eines Spülkastens gezeigt, welcher mit einem vor dem Verkleidungselement 3, ausserhalb des Hohlraums 5 liegenden weiteren Sanitärelement, wie beispielsweise einer Toilettenschüssel verbunden werden kann. Weiter umfasst das Sanitärinstallationssystems 1 mindestens ein Schallabsorptionselement 6. Die Montagestruktur 2 und das mindestens eine Verkleidungselement 3 definieren einen Hohlraum 5, wobei im Hohlraum 5 das Schallabsorptionselement 6 angeordnet ist. Weiter kann, wie oben beschrieben, das mindestens eine wasserführende Sanitärelement 4 mindestens teilweise im Hohlraum 5 angeordnet sein. In der gezeigten Ausführungsform ist die Montagestruktur 2 ein Montagerahmen und es sind mehrere Schallabsorptionselemente 6 im Hohlraum angeordnet. Dabei sind in allen Bereichen entsprechende Schallabsorptionselemente 6 vorhanden. Die Montagestruktur 2 wird dabei vor einer Wand W des Gebäudes G angeordnet. In der gezeigten Ausführungsform umfasst die Montagestruktur 2 Aufnahmestrukturen 21 für eine Toilette, einen Waschtisch und eine Dusche.

Das Verkleidungselement 3 ist hier nur schematisch dargestellt und erstreckt sich in der Darstellung der Übersichtlichkeit halber nur über einen Teilbereich der Montagestruktur 2. Das Verkleidungselement 3 verdeckt aber die Montagestruktur 2 im Wesentlichen vollständig.

Das mindestens eine Schallabsorptionselement 6 ist mit jeweils mindestens einem Befestigungselement 11 an der Montagestruktur 2 befestigt. Das Befestigungselement 11 kann unterschiedlich ausgebildet sein. In den Figuren wird ein Befestigungselement 11 gezeigt, mit welchem das Schallabsorptionselement 6 freihängend, insbesondere freischwingend, an der Montagestruktur 2 im Halterahmen 5 aufgehängt ist. Über das Befestigungselement 11 kann also das Schallabsorptionselement 6 jeweils in den Hohlraum 5 eingehängt werden und ist freischwingend gelagert. Das heisst, das Schallabsorptionselement 6 steht ausschliesslich mit dem Befestigungselement 11 mit der Montagestruktur 2 in Verbindung und könnte eine Schwingbewegung um das Befestigungselement 11 ausführen. Durch diese freihängende Lagerung ergeht der Vorteil, dass Schallwellen entsprechend gut absorbiert werden können. Das Befestigungselement 11 ist am oberen Ende 7 des Schallabsorptionselements 6 angeordnet.

In anderen Varianten könnte das Schallabsorptionselement 6 aber auch derart montiert sein, dass es oben und unten mit der Montagestruktur 2 in Verbindung steht. In dieser Variante wäre das Schallabsorptionselement 6 nicht mehr direkt freischwingend.

Das Schallabsorptionselement 6 ist in der gezeigten Ausführungsform an einer in der Horizontalen H verlaufenden Strebe 19 der Montagestruktur 2 befestigt. Dabei hängt das Schallabsorptionselement 6 in vertikaler Richtung nach unten. Die Strebe trägt das Bezugszeichen 19. Die Strebe 19 kann Teil einer Traverse 20 der Montagestruktur sein oder die Strebe 19 kann Teil eines Lagerelementes 18 sein, welches mit einer Traverse 20 der Montagestruktur verbunden werden kann.

In anderen, in den Figuren nicht gezeigten Ausführungsformen, wäre es auch denkbar, das Schallabsorptionselement 6 fest mit einem Befestigungselement 11 mit der Montagestruktur zu verbinden. Beispielsweise wäre das Schallabsorptionselement 6 dann an eine in der Horizontalen H verlaufenden Strebe und/oder an einer in der Vertikalen verlaufenden Strebe der Montagestruktur 2 fest befestigt.

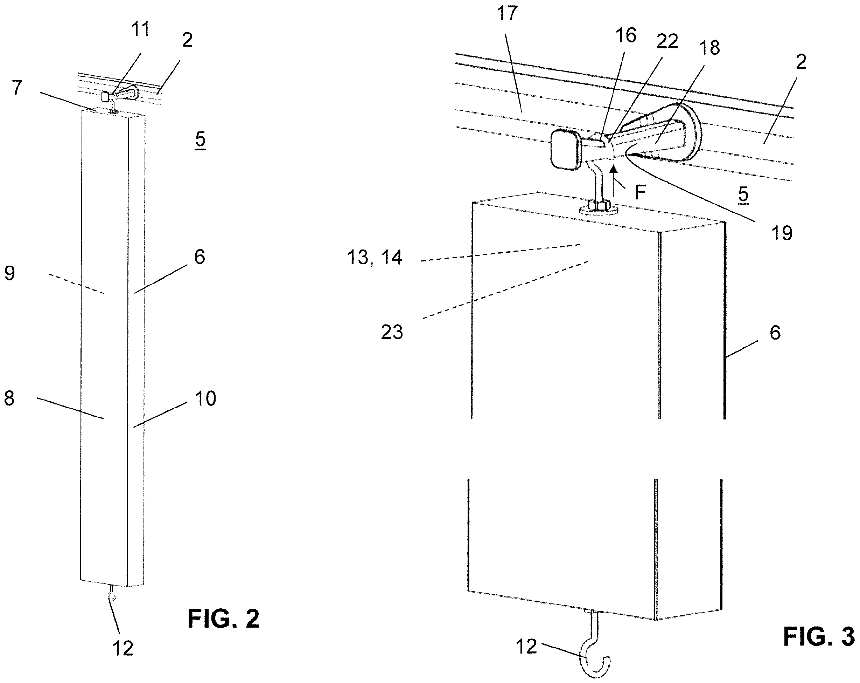

In der Figur 2 wird eine perspektivische Ansicht des Schallabsorptionselementes 6 gezeigt. Das Schallabsorptionselement 6 ist als determinierter bzw. fester bzw. formstabiler Körper ausgebildet. In der gezeigten Ausführungsform weist das Schallabsorptionselementes 6 eine Frontfläche 8, eine Rückfläche 9 und vier Seitenflächen 10 auf, welche die Rückfläche 9 mit der Frontfläche 8 verbinden. Die Rückfläche 9 und die Frontfläche 8 verlaufen dabei parallel zueinander. Das Schallabsorptionselementes 6 ist als Quader ausgebildet. Andere Formen sind ebenfalls denkbar. Beispielsweise könnte das Schallabsorptionselement 6 auch als Zylinder mit einer sich in der Vertikalen erstreckenden Mittelachse ausgebildet sein.

Vorzugsweise sind die Flächen 8, 9, 10 im Wesentlichen flach oder eben ausgebildet. Es wäre aber auch denkbar, einige oder alle der Flächen 8, 9, 10 mit einer Oberflächenstruktur zu versehen. Beispielsweise mit einer Vielzahl von abstehenden Wellen, Pyramiden, Noppen, etc. Hierdurch können die Schallabsorptionseigenschaften noch verbessert werden.

Das Schallabsorptionselementes 6 weist in der gezeigten Ausführungsform in vertikaler Richtung V eine wesentlich grössere Ausdehnung auf als in horizontaler Richtung H. Die Ausdehnung in vertikaler Richtung V ist vorzugsweise um einen Faktor 5 bis 20 grösser als die Ausdehnung in horizontaler Richtung H. Hierdurch wird ein vergleichsweise schlanker Körper geschaffen, welcher für die Schallabsorption gute Vorteile aufweist. Dies gerade bei den für die Montage typischerweise engen Platzverhältnisse.

In der Figur 3 wird eine bevorzugte Lagerung des Schallabsorptionselementes 6 gezeigt. Hier ist das Schallabsorptionselementes 6 mit dem Befestigungselement 11 an einer in der Horizontalen verlaufenden Strebe 19 gelagert. Die Strebe 19 ist dabei an einer lasttragenden Traverse 20 der Montagestruktur 2 angebracht. Vorzugsweise ragt die Strebe 19 in eine Profilnut 17 an der Traverse 20 ein und wird dort entsprechend festgesetzt. Beispielsweise über eine Drehbewegung. Die Strebe 19 weist in der gezeigten Ausführungsform einen bestimmten Lagerbereich 22 auf, an welchem dann das Befestigungselement 11 eingehängt werden kann. Der Lagerbereich 22 wird durch zwei Flächen gebildet und liegt bevorzugt am tiefsten Punkt der beiden Flächen.

In den gezeigten Ausführungsformen sind jeweils ein oberes Befestigungselement 11 und ein unteres Befestigungselement 12 angeordnet. Diese Anordnung hat den Vorteil, dass am unteren Befestigungselement 12 ein weiteres Schallabsorptionselementes 6 aufgehängt bzw. befestigt werden kann. Dabei greift dann das Befestigungselement 11 des Schallabsorptionselementes 6 in das untere Befestigungselement 12 des oberen Schallabsorptionselementes 6 ein. Es wird dabei auf die beiden Schallabsorptionselemente 6 in der Figur 1 verwiesen, welche ganz links angeordnet sind.

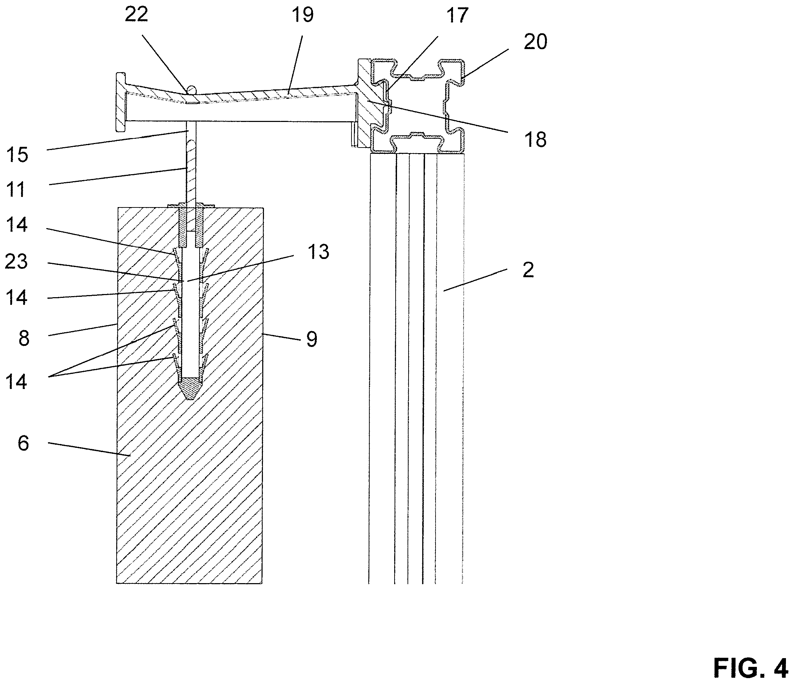

Unter Bezugnahme auf die Figur 4 wird eine beispielhafte Verbindung der Befestigungselemente 11, 12 mit dem Schallabsorptionselement 6 gezeigt. Die diesbezüglichen Ausführungen treffen sowohl auf die Anordnung von einem Befestigungselement als auch auf die Anordnung von mehreren Befestigungselementen zu. Jedes der beiden Befestigungselemente 11, 12 umfasst in der gezeigten Ausführungsform jeweils einen Halteabschnitt 13, mit welchem das Befestigungselement 11, 12 in das Schallabsorptionselementes 6 einragt. Der Halteabschnitt 13 weist in der gezeigten Ausführungsform Widerhaken 14 auf, welche derart angeordnet sind, dass die Widerhaken einen Widerstand bei einer Auszugskraft F auf das Befestigungselement 11, 12 bereitstellen. Das heisst, dass das Befestigungselement 11, 12 aufgrund der Widerhaken 14 nicht oder nur mit grossem Kraftaufwand aus dem Schallabsorptionselementes 6 herausziehbar ist. In der gezeigten Ausführungsform sind die Widerhaken Teil eines Dübelelementes 23, in welches das eigentliche Befestigungselement 11, 12 einragt. Die Widerhaken 14 können aber auch integraler Bestandteil des Befestigungselementes 11, 12 sein. Weiter weisen die Befestigungselemente 11, 12 einen Hakenabschnitt 15 auf. Der Hakenabschnitt 15 umfasst einen Haken 16, mit welchem die Befestigungselemente 11, 12 wie oben beschrieben mit der Strebe 19 verbunden werden kann.

Das Schallabsorptionselementes 6 weist vorzugsweise einen längenbezogenen Strömungswiderstand von >5kPa^{∗}s/m2 auf.

Weiter ist das Schallabsorptionselementes 6 vorzugsweise aus Polyethylenterephthalat, insbesondere aus rezykliertiem Polyethylenterephthalat ausgebildet. Andere Materialien sind auch denkbar.

Das Schallabsorptionselementes 6 weist bevorzugt eine Schichtstruktur auf, wobei die Schichten alle in die gleiche Richtung orientiert sind und miteinander verbunden sind. In der gezeigten Ausführungsform ist die Schichtebene im Wesentlichen in vertikaler Ebene orientiert, was für die Schallabsorptionseigenschaften des Schallabsorptionselementes 6 von Vorteil ist.

Wie von der Figur 1 gezeigt, füllen die Schallabsorptionselemente 6 den Hohlraum 5 nur teilweise, das heisst nicht vollständig, aus. Besonders bevorzugt füllt das Schallabsorptionselementes 6 den Hohlraum 5 bis maximal 50 Volumenprozenten aus.

Die Projektion des Schallabsorptionselements 6 in einer Projektionsebene der Montagestruktur gesehen nimmer vorzugsweise zwischen 15% und 45% der gesamten Projektionsfläche der Frontseite ein.

Bei mehreren Schallabsorptionselementen 6 ist es vorteilhaft, die Schallabsorptionselementes 6 im Wesentlichen gleichmässig im Hohlraum 5 zu verteilen. Allfällige Lücken zwischen einzelnen Schallabsorptionselementen 6 können sich positiv auf die Schallabsorption auswirken.

Ein Verfahren zur Montage eines Sanitärinstallationssystem nach obiger Beschreibung ist dadurch charakterisiert, dass in einem ersten Schritt die Montagestruktur angeordnet wird, dass in einem weiteren Schritt die Anschlusselemente montiert werden, dass in einem weiteren Schritt das mindestens eine Schallabsorptionselement 6 montiert wird, und dass in einem weiteren Schritt das mindestens eine Verkleidungselement 3. Das mindestens eine Sanitärelement wird, je nach Lage im Inneren des Hohlraums oder ausserhalb des Hohlraums, zwischen oder nach den genannten Schritten montiert.

**BEZUGSZEICHENLISTE**

| | | | |
|---|---|---|---|
| 1 | Sanitärinstallationssystem | 17 | Profilnut |
| 2 | Montagestruktur | 18 | Lagerelement |
| 3 | Verkleidungselement | 19 | Strebe |
| 4 | Anschlusselement | 20 | Traverse |
| 5 | Hohlraum | 21 | Aufnahmestrukturen |
| 6 | Schallabsorptionselement | 22 | Lagerbereich |
| 7 | oberes Ende | 23 | Dübelelement |
| 8 | Frontfläche | F | Auszugskraft |
| 9 | Rückfläche | G | Gebäude |
| 10 | Seitenfläche | V | vertikale Richtung |
| 11 | Befestigungselement | H | horizontale Richtung |
| 12 | unteres Befestigungselement | W | Wand |
| 13 | Halteabschnitt | | |
| 14 | Widerhaken | | |
| 15 | Hakenabschnitt | | |
| 16 | Haken | | |

## Patentansprüche

1. Sanitärinstallationssystem (1) umfassend
eine fest mit einem Gebäude (G) verbindbare Montagestruktur (2),
mindestens ein die Montagestruktur (2) verdeckendes Verkleidungselement (3), und
mindestens ein wasserführendes Sanitärelement (4),
wobei die Montagestruktur (2) und das mindestens eine Verkleidungselement (3)
einen Hohlraum (5) definieren, wobei mindestens eines der wasserführenden Sanitärelemente (4) im Hohlraum (5) angeordnet ist und wobei im Hohlraum (5) mindestens ein Schallabsorptionselement (6) angeordnet ist, wobei das mindestens eine Schallabsorptionselement (6) mit mindestens einem Befestigungselement (11) an der Montagestruktur (2) befestigt ist, **dadurch gekennzeichnet, dass** das Schallabsorptionselement (6) mit dem mindestens einen Befestigungselement (11) an einem oberen Ende (7) des Schallabsorptionselements (6) freihängend und insbesondere freischwingend an der Montagestruktur (2) im Hohlraum (5) aufgehängt ist.

2. Sanitärinstallationssystem (1) nach Anspruch 1, **dadurch gekennzeichnet, dass** das Schallabsorptionselement (6) an mindestens einer Stelle oder ausschliesslich genau einer Stelle aufgehängt bzw. befestigt ist.

3. Sanitärinstallationssystem (1) nach einem der vorhergehenden Ansprüche, **dadurch gekennzeichnet, dass** das Schallabsorptionselement (6) an mindestens einer in der Horizontalen (H) verlaufenden Strebe (19) der Montagestruktur (2) befestigt ist und in vertikaler Richtung nach unten hängt, wobei die Strebe (19) eine lasttragende Traverse (20) der Montagestruktur (2) ist; oder wobei die Strebe (19) Teil eines Lagerelements (18) ist, welches in eine Profilnut (17) einer Traverse (2) der Montagestruktur einrastbar ist.

4. Sanitärinstallationssystem (1) nach einem der vorhergehenden Ansprüche, **dadurch gekennzeichnet, dass** das Schallabsorptionselement (6) als determinierter bzw. fester bzw. formstabiler Körper ausgebildet ist und/oder dass das Schallabsorptionselement (6) eine Frontfläche (8), eine Rückfläche (9) und mindestens eine Seitenfläche (10) aufweist, wobei die Rückfläche (9) parallel und beabstandet zur Frontfläche (8) verläuft, und wobei die Rückfläche (9) und die Frontfläche (8) über die Seitenfläche (10) miteinander verbunden sind.

5. Sanitärinstallationssystem (1) nach einem der vorhergehenden Ansprüche, **dadurch gekennzeichnet, dass** das Schallabsorptionselement (6) in Einbaulage in vertikaler Richtung (V) eine wesentlich grössere Ausdehnung aufweist als in horizontaler Richtung (H), wobei die Ausdehnung in vertikaler Richtung (V) vorzugsweise um einen Faktor 5 bis 20 grösser ist als die Ausdehnung in horizontaler Richtung (H).

6. Sanitärinstallationssystem (1) nach einem der vorhergehenden Ansprüche, **dadurch gekennzeichnet, dass** das Schallabsorptionselement (6) derart im Hohlraum (5) liegt, dass sich dieses nur über einen Teilbereich der Höhe erstreckt und dass dieses beabstandet zum Boden (B) des Gebäudes (G) liegt.

7. Sanitärinstallationssystem (1) nach einem der vorhergehenden Ansprüche, **dadurch gekennzeichnet, dass** bei mehreren Schallabsorptionselementen (6) die Schallabsorptionselemente (6) im Wesentlichen gleichmässig im Hohlraum (5) verteilt sind und/oder dass die Projektion des Schallabsorptionselements in einer Projektionsebene der Montagestruktur zwischen 15% und 45% der gesamten Projektionsfläche der Frontseite einnimmt.

8. Sanitärinstallationssystem (1) nach einem der vorhergehenden Ansprüche, **dadurch gekennzeichnet, dass** das Schallabsorptionselement (6) den Hohlraum (5) nur teilweise bzw. nicht vollständig ausfüllt, insbesondere dass das Schallabsorptionselement (6) den Hohlraum (5) bis maximal 50 Volumenprozente ausfüllt.

9. Sanitärinstallationssystem (1) nach einem der vorhergehenden Ansprüche, **dadurch gekennzeichnet, dass** das Schallabsorptionselement (6) einen längenbezogenen Strömungswiderstand von grösser als 5 kPa^{∗}s/m2 aufweist und/oder dass das Schallabsorptionselement (6) aus einem feuerfesten Material ist.

10. Sanitärinstallationssystem (1) nach einem der vorhergehenden Ansprüche, **dadurch gekennzeichnet, dass** das Schallabsorptionselement (6) eine Schichtstruktur aufweist, wobei die Schichten alle in die gleiche Richtung orientiert sind und miteinander verbunden sind.

11. Sanitärinstallationssystem (1) nach einem der vorhergehenden Ansprüche, **dadurch gekennzeichnet, dass** das Befestigungselement (11) ein oberes Befestigungselement (11) ist, mit welchem das Schallabsorptionselement (6) an der Montagestruktur (2) aufgehängt bzw. befestigt werden kann.

12. Sanitärinstallationssystem (1) nach Anspruch 11, **dadurch gekennzeichnet, dass** das obere Befestigungselement (11) einen Halteabschnitt (13) umfasst, mit welchem das Befestigungselement (11, 12) in das Schallabsorptionselement (6) einragt, wobei der Halteabschnitt (13) vorzugsweise Widerhaken (14) aufweist, welche derart angeordnet sind, dass die Widerhaken (14) einen Widerstand bei einer Auszugskraft (F) auf das Befestigungselement (11, 12) bereitstellen.

13. Sanitärinstallationssystem (1) nach einem der vorhergehenden Ansprüche, **dadurch gekennzeichnet, dass** das Schallabsorptionselement (6) ein unteres Befestigungselement (12) aufweist, das derart angeordnet ist, dass am unteren Befestigungselement (12) ein weiteres Schallabsorptionselement (6) aufgehängt bzw. befestigt werden kann.

14. Sanitärinstallationssystem (1) nach Anspruch 13, **dadurch gekennzeichnet, dass** das untere Befestigungselement (12) einen Halteabschnitt (13) umfasst, mit welchem das Befestigungselement (11, 12) in das Schallabsorptionselement (6) einragt, wobei der Halteabschnitt (13) vorzugsweise Widerhaken (14) aufweist, welche derart angeordnet sind, dass die Widerhaken (14) einen Widerstand bei einer Auszugskraft (F) auf das Befestigungselement (11, 12) bereitstellen.

15. Sanitärinstallationssystem (1) nach einem der vorhergehenden Ansprüche 12 oder 14, **dadurch gekennzeichnet, dass** das Befestigungselement (11, 12) einen Hakenabschnitt (15) mit einem Haken (16) aufweist, an welchem das Befestigungselement (11, 12) mit der Montagestruktur verbunden werden kann.

16. Verfahren zur Montage eines Sanitärinstallationssystem nach einem der vorhergehenden Ansprüche, **dadurch gekennzeichnet, dass** in einem ersten Schritt die Montagestruktur (2) angeordnet wird, dass in einem weiteren Schritt Anschlusselemente montiert werden, dass in einem weiteren Schritt das mindestens eine Schallabsorptionselement (6) montiert wird, und dass in einem weiteren Schritt das mindestens eine Verkleidungselement (3) montiert wird, wobei zwischen oder nach den genannten Schritten, das mindestens eine wasserführende Sanitärelement montiert wird.

## Claims

1. Sanitary installation system (1) comprising
a mounting structure (2) which is able to be connected fixedly to a building (G),
at least one panelling element (3) which conceals the mounting structure (2), and
at least one water-conducting sanitary element (4),
wherein the mounting structure (2) and the at least one panelling element (3) define a cavity (5), wherein at least one of the water-conducting elements (4) is arranged in the cavity (5), and wherein at least one sound-absorption element (6) is arranged in the cavity (5), wherein the at least one sound-absorption element (6) is fastened by way of at least one fastening element (11) to the mounting structure (2), **characterized in that** the sound-absorption element (6) is suspended in a free-hanging, and in particular free-swinging, manner from the mounting structure (2) in the cavity (5) at an upper end (7) of the sound-absorption element (6) by way of the at least one fastening element (11).

2. Sanitary installation system (1) according to Claim 1, **characterized in that** the sound-absorption element (6) is suspended or fastened at at least one point or exclusively exactly one point.

3. Sanitary installation system (1) according to either of the preceding claims, **characterized in that** the sound-absorption element (6) is fastened to at least one strut (19) of the mounting structure (2) that runs in the horizontal direction (H), and hangs down in the vertical direction, wherein the strut (19) is a load-bearing cross-member (20) of the mounting structure (2), or wherein the strut (19) is part of a bearing element (18) which is able to be latched into a profile groove (17) of a cross-member (2) of the mounting structure.

4. Sanitary installation system (1) according to one of the preceding claims, **characterized in that** the sound-absorption element (6) is in the form of a determined or solid or dimensionally stable body, and/or **in that** the sound-absorption element (6) has a front surface (8), a rear surface (9) and at least one side surface (10), wherein the rear surface (9) extends parallel to and spaced apart from the front surface (8), and wherein the rear surface (9) and the front surface (8) are connected to one another via the side surface (10).

5. Sanitary installation system (1) according to one of the preceding claims, **characterized in that**, in the installation position, the sound-absorption element (6) has a significantly greater extent in the vertical direction (V) than in the horizontal direction (H), wherein the extent in the vertical direction (V) is greater than the extent in the horizontal direction (H) preferably by a factor of 5 to 20.

6. Sanitary installation system (1) according to one of the preceding claims, **characterized in that** the sound-absorption element (6) is situated in the cavity (5) in such a way that it extends only over a sub-range of the height and that it is situated spaced apart from the floor (8) of the building (G).

7. Sanitary installation system (1) according to one of the preceding claims, **characterized in that**, in the case of multiple sound-absorption elements (6), the sound-absorption elements (6) are distributed in a substantially uniform manner in the cavity (5), and/or **in that** the projection of the sound-absorption element, in a projection plane of the mounting structure, occupies between 15% and 45% of the total projection area of the front side.

8. Sanitary installation system (1) according to one of the preceding claims, **characterized in that** the sound-absorption element (6) fills the cavity (5) only partially or not completely, in particular **in that** the sound-absorption element (6) fills up to at most 50 percent of the cavity (5) in terms of volume.

9. Sanitary installation system (1) according to one of the preceding claims, **characterized in that** the sound-absorption element (6) has an airflow resistivity of greater than 5 kPa*s/m2, and/or **in that** the sound-absorption element (6) is composed of a fire-resistant material.

10. Sanitary installation system (1) according to one of the preceding claims, **characterized in that** the sound-absorption element (6) has a layered structure, wherein the layers are all oriented in the same direction and connected to one another.

11. Sanitary installation system (1) according to one of the preceding claims, **characterized in that** the fastening element (11) is an upper fastening element (11) by way of which the sound-absorption element (6) can be suspended from or fastened to the mounting structure (2).

12. Sanitary installation system (1) according to Claim 11, **characterized in that** the upper fastening element (11) comprises a holding portion (13) by way of which the fastening element (11, 12) projects into the sound-absorption element (6), wherein the holding portion (13) preferably has barbs (14) which are arranged in such a way that the barbs (14) provide a resistance in the case of a pull-out force (F) on the fastening element (11, 12).

13. Sanitary installation system (1) according to one of the preceding claims, **characterized in that** the sound-absorption element (6) has a lower fastening element (12) which is arranged in such a way that a further sound-absorption element (6) can be suspended from or fastened to the lower fastening element (12).

14. Sanitary installation system (1) according to Claim 13, **characterized in that** the lower fastening element (12) comprises a holding portion (13) by way of which the fastening element (11, 12) projects into the sound-absorption element (6), wherein the holding portion (13) preferably has barbs (14) which are arranged in such a way that the barbs (14) provide a resistance in the case of a pull-out force (F) on the fastening element (11, 12).

15. Sanitary installation system (1) according to either of preceding Claims 12 and 14, **characterized in that** the fastening element (11, 12) has a hook portion (15) with a hook (16) at which the fastening element (11, 12) can be connected to the mounting structure.

16. Method for assembling a sanitary installation system according to one of the preceding claims, **characterized in that**, in a first step, the mounting structure (2) is arranged, **in that**, in a further step, connection elements are mounted, **in that**, in a further step, the at least one sound-absorption element (6) is mounted, and **in that**, in a further step, the at least one panelling element (3) is mounted, wherein the at least one water-conducting sanitary element is mounted between or after the stated steps.

## Revendications

1. Système d'installation sanitaire (1) comprenant
une structure de montage (2) qui peut être solidement reliée à un bâtiment (G),
au moins un élément de parement (3) recouvrant la structure de montage (2), et
au moins un élément sanitaire conducteur d'eau (4),
la structure de montage (2) et l'au moins un élément de parement (3) définissant une cavité (5), au moins un des éléments sanitaires conducteurs d'eau (4) étant disposé dans la cavité (5) et au moins un élément d'absorption acoustique (6) étant disposé dans la cavité (5), l'au moins un élément d'absorption acoustique (6) étant fixé à la structure de montage (2) à l'aide d'au moins un élément de fixation (11), **caractérisé en ce que** l'élément d'absorption acoustique (6) est suspendu librement et en particulier de manière à osciller librement à la structure de montage (2) dans la cavité (5) à l'aide de l'au moins un élément de fixation (11) à une extrémité supérieure (7) de l'élément d'absorption acoustique (6).

2. Système d'installation sanitaire (1) selon la revendication 1, **caractérisé en ce que** l'élément d'absorption acoustique (6) est suspendu ou fixé en au moins un point ou en exactement un point exclusivement.

3. Système d'installation sanitaire (1) selon l'une des revendications précédentes, **caractérisé en ce que** l'élément d'absorption acoustique (6) est fixé à au moins un montant (19) de la structure de montage (2), lequel s'étend dans la direction horizontale (H), et pend vers le bas dans la direction verticale, le montant (19) étant une traverse porteuse (20) de la structure de montage (2); ou le montant (19) faisant partie d'un élément de support (18) qui peut être encliqueté dans une rainure profilée (17) d'une traverse (2) de la structure de montage.

4. Système d'installation sanitaire (1) selon l'une des revendications précédentes, **caractérisé en ce que** l'élément d'absorption acoustique (6) est conçu sous la forme d'un corps déterminé ou fixe ou indéformable et/ou **en ce que** l'élément d'absorption acoustique (6) comporte une surface avant (8), une surface arrière (9) et au moins une surface latérale (10), la surface arrière (9) s'étendant parallèlement à la surface avant (8) et à distance de celle-ci, et la surface arrière (9) et la surface avant (8) étant reliées l'une à l'autre par la surface latérale (10).

5. Système d'installation sanitaire (1) selon l'une des revendications précédentes, **caractérisé en ce que** l'élément d'absorption acoustique (6) a, en position installée, une étendue nettement plus importante dans la direction verticale (V) que dans la direction horizontale (H), l'étendue dans la direction verticale (V) étant de préférence supérieure d'un facteur 5 à 20 à l'étendue dans la direction horizontale (H).

6. Système d'installation sanitaire (1) selon l'une des revendications précédentes, **caractérisé en ce que** l'élément d'absorption acoustique (6) est situé dans la cavité (5) de manière à ne s'étendre que sur une partie de la hauteur et à être situé à distance du sol (B) du bâtiment (G).

7. Système d'installation sanitaire (1) selon l'une des revendications précédentes, **caractérisé en ce que**, lorsqu'il y a plusieurs éléments d'absorption acoustique (6), les éléments d'absorption acoustique (6) sont répartis de manière sensiblement uniforme dans la cavité (5) et/ou **en ce que** la projection de l'élément d'absorption acoustique dans un plan de projection de la structure de montage occupe entre 15 % et 45 % de toute la surface de projection du côté avant.

8. Système d'installation sanitaire (1) selon l'une des revendications précédentes, **caractérisé en ce que** l'élément d'absorption acoustique (6) ne remplit la cavité (5) que partiellement ou pas complètement, notamment **en ce que** l'élément d'absorption acoustique (6) remplit la cavité (5) jusqu'à un maximum de 50 % en volume.

9. Système d'installation sanitaire (1) selon l'une des revendications précédentes, **caractérisé en ce que** l'élément d'absorption acoustique (6) présente une résistance à l'écoulement liée à la longueur supérieure à 5 kPa*s/m2 et/ou **en ce que** l'élément d'absorption acoustique (6) est en un matériau ignifuge.

10. Système d'installation sanitaire (1) selon l'une des revendications précédentes, **caractérisé en ce que** l'élément d'absorption acoustique (6) comporte une structure en couches, les couches étant toutes orientées dans le même sens et reliées les unes aux autres.

11. Système d'installation sanitaire (1) selon l'une des revendications précédentes, **caractérisé en ce que** l'élément de fixation (11) est un élément de fixation supérieur (11) à l'aide duquel l'élément d'absorption acoustique (6) peut être suspendu ou fixé à la structure de montage (2).

12. Système d'installation sanitaire (1) selon la revendication 11, **caractérisé en ce que** l'élément de fixation supérieur (11) comprend une portion de retenue (13) avec laquelle l'élément de fixation (11, 12) fait saillie dans l'élément d'absorption acoustique (6), la portion de retenue (13) comportant de préférence des ardillons (14) qui sont disposés de manière à ce que les ardillons (14) exercent une résistance sur l'élément de fixation (11, 12) en présence d'une force d'extraction (F).

13. Système d'installation sanitaire (1) selon l'une des revendications précédentes, **caractérisé en ce que** l'élément d'absorption acoustique (6) comporte un élément de fixation inférieur (12) qui est disposé de manière à ce qu'un autre élément d'absorption acoustique (6) puisse être suspendu ou fixé à l'élément de fixation inférieur (12).

14. Système d'installation sanitaire (1) selon la revendication 13, **caractérisé en ce que** l'élément de fixation inférieur (12) comprend une portion de retenue (13) avec laquelle l'élément de fixation (11, 12) fait saillie dans l'élément d'absorption acoustique (6), la portion de retenue (13) comportant de préférence des ardillons (14) qui sont disposés de manière à ce que les ardillons (14) exercent une résistance sur l'élément de fixation (11, 12) en présence d'une force d'extraction (F).

15. Système d'installation sanitaire (1) selon l'une des revendications précédentes 12 ou 14, **caractérisé en ce que** l'élément de fixation (11, 12) comporte une portion à crochet (15) pourvue d'un crochet (16) au niveau duquel l'élément de fixation (11, 12) peut être relié à la structure de montage.

16. Procédé de montage d'un système d'installation sanitaire selon l'une des revendications précédentes, **caractérisé en ce que** la structure de montage (2) est disposée dans une première étape, **en ce que** des éléments de raccordement sont montés dans une étape supplémentaire, **en ce que** l'au moins un élément d'absorption acoustique (6) est monté dans une étape supplémentaire, et **en ce que** l'au moins un élément de parement (3) est monté dans une étape supplémentaire, l'au moins un élément sanitaire conducteur d'eau étant monté entre ou après lesdites étapes.
